# EUROPEAN PATENT SPECIFICATION

(11) **EP 3 270 026 B1**
(45) Date of publication and mention of the grant of the patent: **18.08.2021**
(21) Application number: 17180154.1
(22) Date of filing: 07.07.2017
(51) Int. Cl.: F16L 13/02, E03F 3/04, F16L 13/11, F16L 47/02, F16L 9/08, F16L 25/00

(54) **METHOD OF PROVIDING A LIQUID PROOF JOINT BETWEEN PARTS AND STRUCTURE COMPRISING SUCH JOINT**
VERFAHREN ZUR BEREITSTELLUNG EINER FLÜSSIGKEITSDICHTEN VERBINDUNG ZWISCHEN TEILEN UND STRUKTUR MIT EINER DERARTIGEN VERBINDUNG
PROCÉDÉ PERMETTANT DE FOURNIR UN JOINT ÉTANCHE AUX LIQUIDES ENTRE DES PIÈCES ET STRUCTURE COMPRENANT UN TEL JOINT

(30) Priority: 11.07.2016 SE 1651036
(43) Date of publication of application: 17.01.2018
(73) Proprietor: Tekniska Verken I Linköping AB, 581 15 Linköping (SE); Uponor Infra Oy, 01510 Vantaa (FI)
(72) Inventor: Rydin, Gunnar, 590 39 Kisa (SE); Vestman, Christian, 65450 Solf (FI)
(74) Representative: AWA Sweden AB

(56) References cited:
- EP-A1- 2 910 698
- CA-A- 1 090 722
- DE-A1- 4 336 379
- US-A- 4 076 283
- US-A1- 2011 108 151
- US-A1- 2016 122 999

## Description

### Technical field

The present disclosure relates to a method of joining a part of concrete with another part, such that a water proof joint between the parts is provided.

The disclosure further relates to a structure comprising first and second parts and a liquid proof joint formed there between.

The disclosure finds particular application in the field of fixed constructions, and in particular for constructions that are to be arranged below ground level, or even under water.

### Background

It is well known to provide concrete structures by connecting a plurality of prefabricated parts, such as slabs, pipes or even box shaped structures.

For example, a culvert system is known from EP2910698A1, in which chambers formed of concrete are used to interconnect channel pipes, which may be formed of e.g. a polymer based material. Such a culvert system is to be arranged underground, and may, in some applications, require measures to be taken to prevent water, such as ground water, from entering into the chamber.

It is common practice to arrange sealing strip, e.g. a bitumen based seal such as SynkoFlex®, or an expanding type seal, e.g. containing rubber and/or bentonite and a resin that swells in water, such as SwellFlex®, between the concrete parts, and/or to inject a sealing compound in the space formed between adjacent concrete parts.

However, such solutions are not always reliable, and one particular disadvantage is that it may be very difficult to know whether the seal has been applied properly, until the structure is actually in use and subjected to water. At this point, it may be too late, or at least very costly, to remedy the problem.

One solution is known from US 2016/0122999A1.

DE 43 36 379 A discloses a join seal profile for concrete slabs. Hence, there is a need for an improved method of joining parts, where one of the parts is made of concrete, and in particular prefabricated concrete.

### Summary

It is a general object of the present invention to provide an improved method of joining parts, where one part is made of concrete, in order to provide a water proof seal between the parts.

The invention is defined by the appended independent claims, with embodiments being set forth in the appended dependent claims, in the following description and in the drawings.

According to a first aspect, there is provided a method of providing a liquid proof joint according to claim 1.

The term "joint surface" is understood as a surface which is active in the joint between the two parts.

The first part being "of concrete" does not exclude it from containing reinforcements or insets that provide e.g. various types of interfaces or interconnections.

A "polymer based material" may be a material that comprises a sufficient amount of polymer material for it to be processable as a polymer material. In particular, such polymer based materials may consist of one or more polymers and one or more additives, which may be provided for modifying the properties of the polymer(s). Such additives may, as non-limiting examples, include reinforcing additives, stabilizers, flame retardants, stearates, pigments, metal deactivators, processing aids, optical brighteners, antioxidants, antiblock compounds or slip agents.

The first and second polymer based materials should be compatible to such an extent that they can be welded or glued together. For example, the first and second polymer based materials may be based on the same polymer or polymer combination, or they may be made of the same material.

The polymer materials may be "weldable", which implies that the material of the edge inset should be weldable by heating and/or chemical means, such as by means of a solvent ("solvent welding").

Examples of such materials include polyethylene and polypropylene.

Polymers which can be solvent welded include polyvinyl chloride and acrylonitrile butadiene styrene.

As another alternative, the joint surfaces may be connected by means of an adhesive, such as glue. Examples of polymers which can be glued include polycarbonate, polystyrene and acrylonitrile butadiene styrene.

Where a part is made of concrete, this may be a prefabricated part, wherein the edge inset is provided in connection with the casting of the concrete part. Hence, such a part may be produced in a designated production facility and transported to the site where it is to be joined with the other part.

As another alternative, one, or both, of the concrete parts may be produced on site, and provided with an edge inset in connection with its production.

The latter may be the case where it is desirable to provide a liquid proof joint between e.g. a baseplate slab, which is produced on site, and a wall, which may be prefabricated.

By providing the part with an edge inset of polymer based material, the joint between the polymer material and the concrete material may be formed under controlled conditions, especially where the concrete part is prefabricated.

The weld or glue joint between the edge inset and the second part is provided on site, and can easily be inspected, such that its integrity can be verified even before the joint has been subjected to liquid, such as water.

The first part may be formed to at least 75 % by weight of the concrete, preferably to at least 90 % by weight.

The edge inset comprises a face portion that forms part of the joint surface of the first part and a fixing portion which is recessed into the first part.

By recessing the fixing portion into the first part, a strong connection can be provided, as well as good sealing. Hence, the fixing portion is at partially embedded into the concrete.

The method may further comprise arranging the face portion of the edge inset to cover at least 50 %, preferably at least 75 %, at least 90 % or the entire associated joint surface.

The method may further comprise recessing the fixing portion from the face portion by a distance corresponding to 5 %-200 % of a thickness of the first part as seen in a direction perpendicular to a recess direction.

The term "recess direction" is defined as the direction in which the fixing portion extends from the joint surface.

The method further comprises connecting the fixing portion to a reinforcement of the first part.

For example, the fixing portion may be connected to the reinforcement bars or and/or reinforcement grid, which is embedded in the concrete.

That is, the fixing portion may be connected to the internal reinforcement of the first part.

The method may further comprise arranging a sealing material on the fixing portion, such that a liquid proof seal is provided between the concrete material and the fixing portion. The sealing material may be any type of sealing material that is conventionally used to provide a liquid seal between concrete parts or between a concrete part and a part made of another material than concrete. Non-limiting examples include a sealing strip, e.g. a bitumen based seal such as SynkoFlex®, or an expanding type seal, e.g. containing rubber and/or bentonite and a resin, and which swells in water.

The sealing material may be in the form of an elongate sealing strip, which may be of an adhesive and/or expanding material, which extends along the entire joint.

The method may further comprise providing an anchoring portion on the fixing portion.

In the method, the edge insets may be connected to the first part during a forming operation, wherein the first part is initially formed.

Hence, the edge inset may be integrated with the first part in connection with the forming, e.g. casting, thereof.

In the method, the parts may define a space, wherein the edge portion encircles the space and wherein the welding is carried out such that the liquid proof joint encircles the space.

Hence, the liquid proof joint may be provided as an endless joint.

In the method, the edge inset may be formed into an endless structure, adapted for encircling the space, prior to being provided to the first part.

The second part may be formed to at least 75 % by weight of the concrete, preferably to at least 90 % by weight, and the second joint surface may be provided with a second edge inset of the polymer based material, whereby the second edge inset extends along the joint.

The method may further comprise providing a force transferring member, which extends across the joint and which presents a greater modulus of elasticity than the edge insets.

The force transferring member may be a beam, such as a metal beam, preferably of steel.

By applying such a force transferring member, the welded liquid proof joint may be relieved of such loads as may arise due to e.g. lateral ground pressure.

Preferably, the force transferring member is anchored to the respective concrete part such that it is capable of transferring a torque about an axis that is parallel with a longitudinal direction of the joint.

The method may further comprise arranging at least one respective anchoring member on the respective concrete part and connecting the force transferring member to the anchoring members.

The connection between the force transferring member and the anchoring member may be provided by welding, bolting or riveting.

The second part may be formed to at least 75 % by weight of the second polymer based material, preferably to at least 90 % by weight.

According to a second aspect, there is provided a structure according to claim 10.

The structure may typically be a fixed structure.

The first part may be formed to at least 75 % by weight of the concrete, preferably to at least 90 % by weight.

In the structure, the edge inset may comprise a face portion that provides the forms part of the joint surface of the first part and a fixing portion which is recessed into the first part.

The face portion of the edge inset may cover at least 50 %, preferably at least 75 %, at least 90 % or the entire associated joint surface.

The fixing portion may be recessed the face portion by a distance corresponding to 5 %-200 % of a thickness of the first part as seen in a direction perpendicular to a recess direction.

The fixing portion is connected to a reinforcement of the first part.

The structure may further comprise a sealing material, which is arranged on the fixing portion, such that a liquid proof seal is provided between the concrete material and the fixing portion.

The structure may further comprise an anchoring portion, which is arranged on the fixing portion.

The edge insets may be integrated with the first part in connection with a casting operation, wherein the first part is initially formed.

The parts may define a space, wherein the edge portion encircles the space and wherein the liquid proof joint encircles the space.

The edge portion may define an endless structure, adapted for encircling the space, and maybe integrated with the first part.

The second part may be formed to at least 75 % by weight of concrete, preferably to at least 90 % by weight, and the second joint surface may be provided with a second edge inset of the second polymer based material, whereby the second edge inset extends along said joint.

The structure may further comprise a force transferring member, which extends across the joint and which presents a greater modulus of elasticity than the edge insets.

The structure may further comprise at least one respective anchoring member on the respective part, wherein the force transferring member is connected to the anchoring members.

Alternatively, the second part may be formed to at least 75 % by weight of the second polymer based material, preferably to at least 90 % by weight.

The liquid proof joint may be at least partially arranged below a ground level or below a water surface.

Hence, the liquid proof joint may provide a joint between parts that are wholly or partially arranged below ground level or below a water surface.

Hence, the parts may form part of a structure that is completely below ground or water surface. Alternatively, the parts may form part of a split level structure, a terrace structure or a dam.

According to a third aspect, there is provided a connection chamber for interconnecting channels forming a culvert system, comprising the structure described above, wherein the first part forms a first wall section that encloses a first portion of a chamber space, the second part forms a second wall section that encloses a second portion of the chamber space, and the liquid proof joint extends along contact surfaces between the first and second wall sections to provide a seal between the first and second wall sections.
The first wall section may be a lower wall section and the second wall section may be an upper wall section.
The connection chamber may further comprise an opening, which is formed by an edge recess in at least the first wall section and a channel connecting to the opening. A portion of the first edge inset may extend along the edge recess and the first edge inset may be welded or glued to the channel to provide a liquid proof joint between the first wall section and the channel.

### Brief description of the drawings

Fig. 1 schematically illustrates a portion of a culvert system in an exploded view.
Fig. 2 schematically illustrates the portion of a culvert system in an assembled state.
Figs 3a-3b schematically illustrate a complete edge inset set.
Fig. 4 is a schematic sectional view of a joint between a pair of concrete parts.
Fig. 5 is a schematic sectional view of the edge inset used in the joint of Fig. 4.
Fig. 6 is a schematic sectional view of a joint between a pair of concrete parts.
Fig. 7 is a schematic sectional view of the edge inset used in the joint of Fig. 6.
Fig. 8 is a schematic side view of a pair of joined concrete parts.

### Detailed description

In the following, the present concept will be illustrated with respect to a culvert system of the kind set forth in EP2910698A1.

It is recognized that the concept of joining parts of concrete, or a part of concrete with a part of another material, described herein are applicable to a great variety of applications where it is desired to achieve a liquid proof joint.

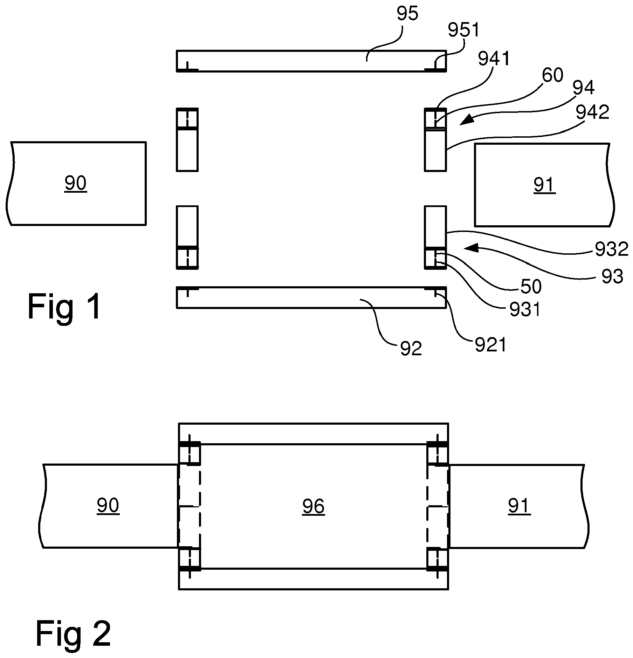

Fig. 1 schematically illustrates a portion of a culvert system which is formed according to the principles set forth in EP2910698A1.

Fig. 1 schematically illustrates the chamber in an exploded cross sectional view.

The culvert system illustrated comprises a chamber that is to be used to interconnect a pair of channel pipes 90, 91. Inside the chamber, there is defined a space 96, which may be used access the channel pipes 90, 91.

The chamber comprises a baseplate 92, a lower wall section 93, an upper wall section 94 and a roofplate 95.

It is possible to form the baseplate 92 and the lower wall section 93 in one piece, in which case it would not be necessary to provide any additional joint seal between the baseplate 92 and the lower wall section 93.

It is also possible to form the upper wall section 94 and the roofplate 95 in one piece, in which case it would not be necessary to provide any additional joint seal between the upper wall section 94 and the roofplate 95.

The baseplate 92 may be formed as a reinforced concrete plate. In one embodiment, the baseplate 92 is formed in situ.

As an alternative, the baseplate 92 may be formed from a polymer based material.

The lower wall section 93 may be formed as a set of walls that extend so as to follow a footprint outline of the baseplate 92. Hence, where the baseplate 92 is formed as a rectangular plate, the wall portions making up the lower wall section will make up a similarly rectangular shape.

Like the baseplate 92, all wall sections 93, 94 and the roof section 95 may be formed from reinforced concrete. The reinforcement, which may comprise net or grid like structures, as well as traditional reinforcement bars, is embedded in the concrete.

As illustrated in Fig. 1, wall portions where a connection to the channel pipe 90, 91 is to be provided, may comprise a recess 932, as seen from an upper edge of said wall portions.

A joint seal 921, 931 may be provided in a joint surface between the baseplate 92 and the lower wall section 93.

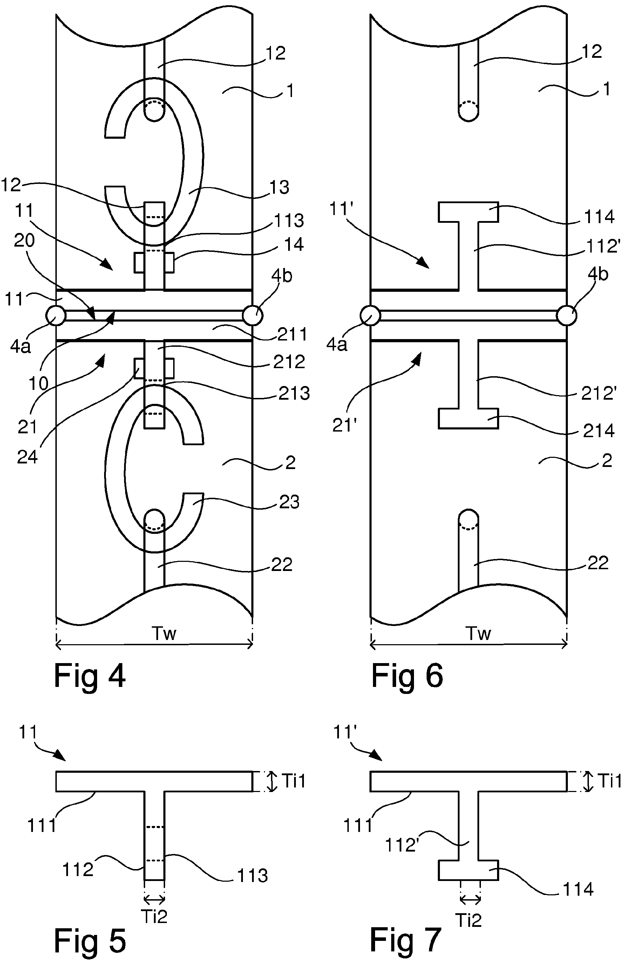

This joint seal may be formed by a respective profile frame 921, 931 being integrated with the baseplate 92 and the lower wall section 93, respectively, as will be described with reference to Figs 4-7.

In the case where the baseplate 92 is made of polymer based material, the joint may be formed between the baseplate and an edge inset 931. In particular, the baseplate can be arranged to rest on the ground, and the wall section 93 may also rest on the ground, such that there is no horizontal overlap between the baseplate 92 and the wall section 93

The profile frames 921, 931 are welded to each other as will be further discussed in the following.

The upper wall section 94 may be formed in a manner similar to that of the lower wall section 93, and may provide a footprint that is substantially identical to that of the lower wall section 93.

Hence, a lower edge of the upper wall section 94 will form a joint surface towards the upper edge of the lower wall section 93.

As is the case with the lower wall section 93, there may be provided recesses 942 extending from the lower edges of those wall portions of the upper wall section 94 where channel pipe connections are to be provided.

The recesses 932, 942 may be formed so as to each correspond to half the cross section of the channel pipe 90, 91. That is, where the channel pipe presents a circular cross section, the recesses 932, 942 may present semicircular shape.

A joint seal 941, 951 may be provided in a joint surface between the upper wall section 94 and the roofplate 95.

This joint seal may be formed by a respective profile frame 941, 951 being integrated with the upper wall section 94 and the baseplate 95, respectively, as will be described with reference to Figs 4-7. The profile frames 941, 951 are welded to each other as will be further discussed in the following.

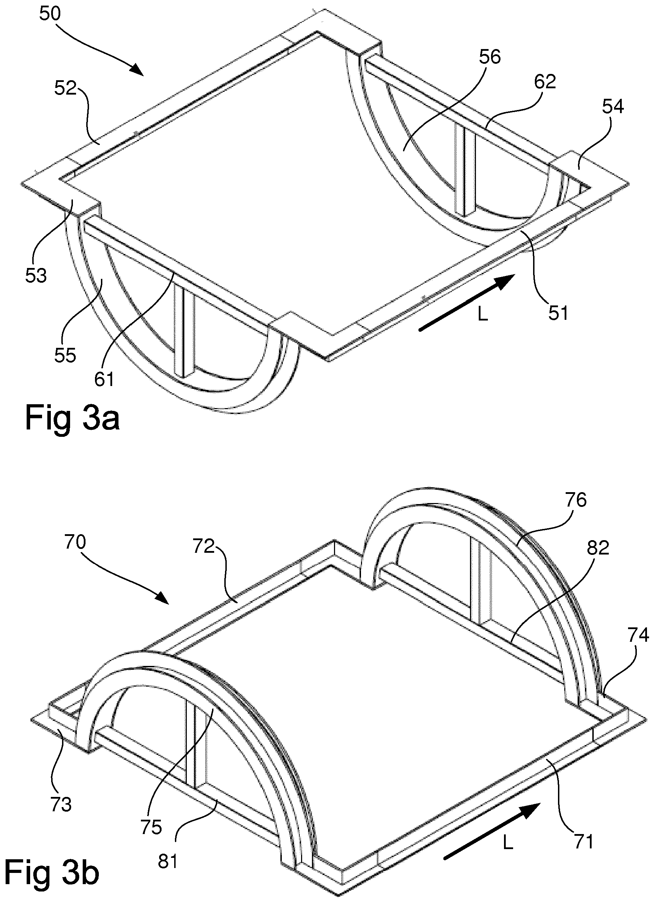

A further joint seal is provided between the lower wall section 93 and the upper wall section 94. Where channel pipes 90, 91 are to be connected to the chamber, the profile frames 50, 70 may be designed as per Figs 3a-3b.

The principle of the joint seal may also be used to connect the channel pipes 90, 91 to the wall sections 93, 94. That is, where the channel pipes 90, 91 are formed of a polymer based material, these may be welded or glued to the edge inset 75, 76 (Figs 3a-3b) provided at the opening.

Fig. 2 schematically illustrates the chamber in its assembled state, wherein the baseplate 92 is joined with the lower wall section 93, the upper wall section 94 is joined with the lower wall section 93 and the roofplate 95 is joined with the upper wall section 94.

Figs 3a-3b schematically illustrate integrated edge portion frames 50, 70 for use in an infrastructure channel connection chamber to be arranged underground.

Fig. 3a schematically illustrates the edge portion frame for a lower chamber part and Fig. 3b schematically illustrates the edge portion frame for an upper chamber part.

The frame 50 comprises a pair of long side strips 51, 52 and a pair of short side strips 53, 54. At the short sides, there is provided a respective semicircular section 55, 56, which together with the adjoining frame 70 is to provide a connection for the channel pipe.

Likewise, the frame 70 comprises a pair of long side strips 71, 72 and a pair of short side strips 73, 74. At the short sides, there is provided a respective semicircular strip section 75, 76, which together with the adjoining frame 50 is to provide a connection for the channel pipe.

At the semicircular sections 55, 56; 75, 76, there may be provided a respective temporary support frame 61, 62; 81, 82, that is arranged to ensure that the semicircular strip sections 55, 56; 75, 76 maintain their respective semicircular shape during the casting process.

The temporary support frame 61, 62; 81, 82 may be removed after the casting process has finished to such a degree that the semicircular strip sections 55, 56; 75, 76 are adequately fixed relative to the respective chamber part.

The temporary support frames 61, 62; 81, 82 may be provided as a profiled polymer part that is welded or otherwise connected to the associated semicircular strip section 55, 56; 75, 76, and which is cut away once it is no longer needed.

The strips 51, 52, 53, 54, 55, 56; 61, 62, 63, 64, 65, 66 may present the same cross sectional profile.

Alternative, the straight strip sections 51, 52, 53, 54; 61, 62, 63, 64 may present a first profile and the semicircular strip sections 55, 56; 75, 76 may preset a different profile, e.g. a profile that is adapted specifically for connecting to the channel pipe, which may present helically extending corrugations.

In the following, profiles that may be used for any of the strip sections, and in particular for the substantially straight strip sections 51, 52, 53, 54; 61, 62, 63, 64, will be discussed.

Referring to Figs 4 and 5, there is schematically illustrated a joint between a pair of concrete parts 1, 2.

The concrete parts 1, 2 may be a pair of walls, and the joint may extend horizontally, vertically or at any angle there between. The walls may have a thickness Tw.

Each of the walls is provided with an edge inset 11, 21, which has the form of an elongate strip of polymer based material, which in the illustrated example has a generally T-shaped profile cross section. The profile comprises a face portion 111, 211, which is to form the joint surface 10, 20, and a fixing portion 112, 212, which is to be engulfed by the concrete making up the respective part 1, 2.

The face portion may have a generally rectangular cross section, with a thickness Ti1 on the order of 3-15 % of its width along the thickness direction Tw of the joint.

The thickness Ti1 of the face portion 111, 211 may be on the order of 3-15 % of a wall thickness Tw at the joint, preferably 5-10 %.

The fixing portion 112, 212 may be formed as a flange, extending substantially perpendicularly from the face portion 111, 211 also have generally rectangular cross section, with a thickness as mentioned above.

The thickness Ti2 of the fixing portion 112, 212 may be on the order of 5-20 % of a wall thickness Tw at the joint, preferably 5-10 %.

Typically, the thicknesses Ti1, Ti2 may be on the order of 10-50 mm.

The fixing portion may be provided with a plurality of holes or recesses 113, 213, which may be arranged at intervals along its length direction L. these holes or recesses 113, 213 are adapted for connection to the reinforcement 12, 22 embedded by the concrete part 1, 2.

As illustrated in Fig. 4, the reinforcement 12, 22 may be connected to the edge inset 11, 21 by means of a connector 13, 23, which may have the form of a clamp, a wire or the like.

Alternatively, the reinforcement may be directly connected to the edge inset 11, 21, e.g. by a distal portion of the reinforcement being bent to form a hook that is inserted in the hole or recess 113, 213.

Optionally, and in order to enhance the sealing properties, a sealing material 14, 24 may be applied to the fixing portion 112, 212, spaced from the joint surfaces 10, 20. Preferably, the sealing material 14, 24 is applied on both sides of the fixing portion and along the length of the profile.

Examples of sealing materials include such sealing materials as are conventionally used to provide sealing against concrete. Non-limiting examples include expansion tape (sealing tape), such as SynkoFlex® or SwellFlex®.

Referring to Figs 6 and 7, there is illustrated an embodiment of an edge inset 11', 21' wherein the fixing portion 112', 212', instead of the holes or recesses 113, 213 (Figs 4, 5), is provided with a locking device 114, 214 that is integrally formed with the profile of the edge inset 11, 21.

The locking device 114, 214 thus comprises at least one flange extending from a distal part of the fixing portion 112', 212' and in a direction substantially parallel with that of the face portion 111, 211. Flanges may be provided on both faces of the fixing portion 112', 212', as illustrated.

The locking device 114, 214 may extend from the face of the fixing portion 112', 212' on the order of 30-150 % of the thickness Ti2 of the fixing portion. A width of the locking device 114, 214 may be on the order of 50-150 % of that (i.e. Ti2) of the fixing portion.

The locking device thus provides for enhanced connection between the concrete of the part 1, 2 and the edge inset 11', 21', even where there is no connection to the reinforcement 12, 22 embedded by the concrete art 1, 2.

It is understood that the locking device 114, 214 may be used together with the hole or recess 113, 213.

With the edge insets 11, 21 integrated with the respective concrete part 1, 2 as illustrated in Fig. 4, the concrete parts 1, 2 are arranged with the edge insets 11, 21 adjacent each other, as illustrated. Typically, the joint surface 10 of one of the parts 1 will face, and preferably overlap to as great extent as possible, the joint surface 20 of the other concrete part 2. Ideally, the joint surfaces 10, 20 contact each other. However, due to production tolerances, which may be on the order of +/- 5-30 mm, there may only partial contact, with smaller or larger gaps along the joint.

Thus, in order to provide a proper seal, edge insets of the edge insets 11, 21 are welded together. Hence welds 4a, 4b are provided as illustrated in Fig. 4.

The welds may be provided in the form of heat welds, whereby portions of the edge insets 11, 21 as well as a welding material are heated and forced into contact, after which they are allowed to cool down.

Alternatively, a chemical weld may be provided, also with the addition of a welding material, which integrates with both edge insets 11, 21.

As yet another alternative, the profiles may be joined by an adhesive, such as a glue.

Prior to the welding or gluing operation, the surface portions that are to be welded or glued together may be cleaned from dirt and moisture. The surfaces may also be abraded so as to remove undesirable surface coatings, such as oxide layers, etc.

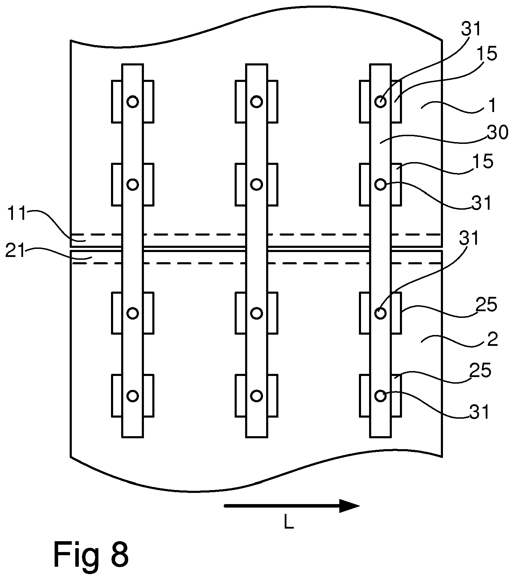

Referring to Fig. 8, there is illustrated a method of joining together concrete parts which are subjected to loads in a direction which is perpendicular to the longitudinal direction L of the joint, and which is perpendicular to the joint plane, as would typically be the case where the concrete parts constitute vertical walls that are arranged below ground level and that are subjected to a lateral force from e.g. soil, sand, gravel, etc.

As illustrated in Fig. 8, a plurality of anchoring elements 15, 25 are arranged in each concrete part 1, 2. The anchoring elements 15, 25 may be integrated with the respective concrete pat 1, 2 in connection with its forming, e.g. during the casting operation. To this end, the anchoring elements may comprise a respective fixing portion that extends into the concrete part and one attachment portion, which is at least partially exposed at the surface of the concrete part 1, 2.

In its most simple form, the anchoring elements may comprise a metal plate, to which is attached a fixing member, e.g. in the form of a reinforcement bar that is to be embedded into the concrete, such that the metal plate is exposed at the surface of the concrete part 1, 2. The reinforcement bar may be welded to one face of the metal plate, and may extend either straight there from, or in a U-shape, with both free ends welded to the metal plate such that a loop is formed.

The anchoring elements 15, 25 may be connected to the reinforcement 12, 22 embedded in the concrete part 1, 2, in a manner similar to that of the edge portions 11, 21.

There may be at least one anchoring element 15, 25 on each side of the joint, but it may be preferable to provide at least two anchoring elements on each side of the joint such that said at least two anchoring elements are arranged on a line that is perpendicular to the longitudinal direction L of the joint.

The anchoring members 15, 25 are interconnected by an elongate member 30, such as a metal bar, metal beam or metal rod.

Preferably, the interconnection should be such as to allow transfer of torque about an axis that is parallel to the longitudinal direction L of the joint.

The interconnection at each anchoring element 15, 25 may be provided by means of welding.

Alternatively, or as a supplement, the interconnection may be provided by means of a bolted connection 31, and/or by a riveted connection.

For example, a female thread may be integrated with the anchoring member, whereby a male thread is caused to engage the elongate member 30 and the female thread.

As another example, the anchoring member 15, 25 may be provided with the male thread and the elongate member 30 may engage this male thread by means of a hole and secured by a nut.

As illustrated, one or more elongate members 30 may be provided at spaced apart portions along the joint, each elongate member 30 connecting to one or more anchoring members on each concrete part 1, 2.

The edge inset 11, 21 may be formed of a material based on a thermoplastic polymeric material, such as polyethylene or polypropylene.

The edge inset may be produced by extrusion.

It is noted that the face part 111, 211 may cover the entire joint surface, or that it may cover part thereof. For example, the face part may extend only along one or both of the edges of the joint surface.

Hence, the edge inset 11, 21 may have generally T-shaped or generally I-shaped cross section, as mentioned above.

As other options, the edge inset may be generally L-shaped, generally U-shaped, etc.

Although the concrete parts illustrated have the same thickness Tw, it is understood that the present concepts may be used also for parts having different thicknesses.

It is also understood, that while the edge insets 11, 21 illustrated herein are provided with welds 4a, 4b or glue on both sides of the wall, it may be sufficient to provide a weld only on one side.

A profile frame 921, 931, 941, 951, 50, 70 may be provided by a one or more profile strip sections being joined together short side to short side so as to form a closed loop that is sized and adapted to correspond to an outline of the space to be sealed.

The concept of providing a liquid proof joint described herein may be applied to various types of structures, such as, but not limited to, building parts, such as wall-to-wall connections, wall-to-baseplate connections, wall-to-joist connections, connections between pipes, connections between a pipe and another structure, etc.

In particular, the concept is applicable to situations where it is desired to provide a liquid proof joint between two parts which are both made of concrete, and to situations where it is desired to provide a liquid proof joint between one part made of concrete and another part made of a polymer based material.

Moreover, the concept is applicable to structures where it is desirable to enclose, transport, process or contain a liquid. Such situations include, but are not limited to pipes or channels for transportation of liquids (e.g. sewage), treatment plants, dams, reservoirs, dykes or gullies.

## Claims

1. A method of providing a liquid proof joint, comprising:
providing a first part (1) made of concrete, having a first joint surface (10) that is provided with a first edge inset (11, 11') of a first polymer based material, said edge inset (11, 11') extending along said joint,
providing a second part (2) having a second joint surface (20) comprising a second polymer based material and extending along said joint,
arranging the parts (1, 2) with the first and second joint surfaces (10,20) adjacent each other, and
welding or gluing the first joint surface (10) of the first part (1) to the second joint surface (20) of the second part (2) along the joint to provide the liquid proof joint,
wherein the first edge inset (11, 11') comprises a face portion (111) that forms part of the first joint surface (10) of the first part (1) and a fixing portion (112. 112') which extends from the first joint surface (10) and is recessed into the first part (1), and
**characterized by**
the method further comprising connecting the fixing portion (112, 112') to a reinforcement (12) of the associated first part.

2. The method as claimed in claim 1, wherein the first part is formed to at least 75 % by weight of the concrete, preferably to at least 90 % by weight.

3. The method as claimed in claim 1 or 2, further comprising recessing the fixing portion from the face portion by a distance corresponding to 5 %-200 % of a thickness of the associated concrete first part as seen in a direction perpendicular to a recess direction.

4. The method as claimed in any one of the preceding claims, further comprising arranging a sealing material (14) on the fixing portion, such that a liquid proof seal is provided between the concrete material and the fixing portion.

5. The method as claimed in any one of the preceding claims, further comprising providing an anchoring portion (114) on the fixing portion (112').

6. The method as claimed in any one of the preceding claims, wherein the edge inset is connected to the first part during a forming operation, wherein the first part is initially formed.

7. The method as claimed in any one of the preceding claims, wherein the second part is formed to at least 75 % by weight of the concrete, preferably to at least 90 % by weight, and wherein the second joint surface (20) is provided with a second edge inset (21) of the polymer based material, whereby the second edge inset (21) extends along said joint.

8. The method as claimed in claim 7, further comprising providing a force transferring member (30), which extends across the joint and which presents a greater modulus of elasticity than the edge insets.

9. The method as claimed in claim 8, further comprising arranging at least one respective anchoring member (15, 25) on the respective part (1, 2) and connecting the force transferring member to the anchoring members (15, 25).

10. A structure, comprising:
a first part (1) made of concrete presenting a first joint surface (10) having a first edge inset (11) of a first polymer based material, and
a second part (2) presenting a second joint surface (20) of a second polymer based material,
wherein the parts (1, 2) are arranged with their joint surfaces (10, 20) adjacent each other, such that a joint is formed between the joint surfaces (10,20),
wherein the first joint surface (10) is welded or glued to the second joint surface (20) along the joint, such that the joint is liquid proof,
wherein the first edge inset (11, 11') comprises a face portion (111) that forms part of the first joint surface (10) of the first part (1) and a fixing portion (112, 112') which extends from the first joint surface (10) and is recessed into the first part (1), and
**characterized in that**
the fixing portion (112, 112') is connected to a reinforcement (12) of the associated first part.

11. The structure as claimed in claim 10, wherein the first part (1) is formed to at least 75 % by weight of the concrete, preferably to at least 90 % by weight.

12. The structure as claimed in any one of claims 10-11, wherein the liquid proof joint is adapted to be at least partially arranged below a ground level or below a water surface.

13. A connection chamber for interconnecting channels (90, 91) forming a culvert system, comprising the structure as claimed in any one of claims 10-12, wherein:
the first part (1) forms a first wall section (93) that encloses a first portion of a chamber space (96),
the second part (2) forms a second wall section (94) that encloses a second portion of the chamber space (96), and
the liquid proof joint (50, 60) extends along contact surfaces between the first and second wall sections (93, 94) to provide a seal between the first and second wall sections (93, 94).

## Patentansprüche

1. Verfahren zum Bereitstellen einer flüssigkeitsdichten Verbindung, das Folgendes umfasst:
Bereitstellen eines ersten Teils (1) aus Beton, das eine erste Verbindungsfläche (10) aufweist, die mit einem ersten Kanteneinsatz (11, 11') aus einem ersten polymerbasierten Material versehen ist, wobei der Kanteneinsatz (11, 11') sich entlang der Verbindung erstreckt,
Bereitstellen eines zweiten Teils (2), das eine zweite Verbindungsfläche (20) aufweist, die ein zweites polymerbasiertes Material umfasst und sich entlang der Verbindung erstreckt,
Anordnen der Teile (1, 2), so dass die erste und die zweite Verbindungsfläche (10, 20) einander benachbart sind, und
Schweißen oder Kleben der ersten Verbindungsfläche (10) des ersten Teils (1) an die zweite Verbindungsfläche (20) des zweiten Teils (2) entlang der Verbindung, um die flüssigkeitsdichte Verbindung bereitzustellen,
wobei der erste Kanteneinsatz (11, 11') einen Stirnabschnitt (111) umfasst, der einen Teil der ersten Verbindungsfläche (10) des ersten Teils (1) bildet, und einen Befestigungsabschnitt (112, 112'), der sich von der ersten Verbindungsfläche (10) erstreckt und in den ersten Teil (1) vertieft ist, und
**dadurch gekennzeichnet, dass**
das Verfahren ferner das Verbinden des Befestigungsabschnitts (112, 112') mit einer Versteifung (12) des zugehörigen ersten Teils umfasst.

2. Verfahren nach Anspruch 1, wobei das erste Teil zu mindestens 75 Gew.-% aus Beton, vorzugsweise zu mindestens 90 Gew.-%, gebildet ist.

3. Verfahren nach Anspruch 1 oder 2, ferner umfassend das Vertiefen des Befestigungsabschnitts vom Stirnabschnitt durch einen Abstand, der 5 % bis 200 % einer Dicke des zugehörigen Betons des ersten Teils entspricht, in einer zu einer Vertiefungsrichtung senkrechten Richtung gesehen.

4. Verfahren nach einem der vorhergehenden Ansprüche, ferner umfassend das Anordnen eines Dichtungsmaterials (14) am Befestigungsabschnitt, so dass eine flüssigkeitsdichte Abdichtung zwischen dem Betonmaterial und dem Befestigungsabschnitt bereitgestellt ist.

5. Verfahren nach einem der vorhergehenden Ansprüche, ferner umfassend das Bereitstellen eines Verankerungsabschnitts (114) am Befestigungsabschnitt (112').

6. Verfahren nach einem der vorhergehenden Ansprüche, wobei der Kanteneinsatz mit dem ersten Teil während eines Bildungsvorgangs verbunden wird, wobei das erste Teil zuerst gebildet wird.

7. Verfahren nach einem der vorhergehenden Ansprüche, wobei der zweite Teil zu mindestens 75 Gew.-% aus Beton, vorzugsweise zu mindestens 90 Gew.-%, gebildet ist, und wobei die zweite Verbindungsfläche (20) mit einem zweiten Kanteneinsatz (21) des polymerbasierten Materials versehen ist, wodurch der zweite Kanteneinsatz (21) sich entlang der Verbindung erstreckt.

8. Verfahren nach Anspruch 7, ferner umfassend das Bereitstellen eines kraftübertragendes Elements (30), welches sich über die Verbindung erstreckt und welches ein größeres Elastizitätsmodul als die Kanteneinsätze aufweist.

9. Verfahren nach Anspruch 8, ferner umfassend das Anordnen mindestens eines jeweiligen Verankerungselements (15, 25) am jeweiligen Teil (1, 2) und das Verbinden des kraftübertragenden Elements mit den Verankerungselementen (15, 25).

10. Struktur, die Folgendes umfasst:
ein erstes Teil (1) aus Beton, das eine erste Verbindungsfläche (10) mit einem ersten Kanteneinsatz (11) aus einem ersten polymerbasierten Material darstellt, und
ein zweites Teil (2), das eine zweite Verbindungsfläche (20) aus einem zweiten polymerbasierten Material darstellt,
wobei die Teile (1, 2) so angeordnet sind, dass ihre Verbindungsflächen (10, 20) einander benachbart sind, derart, dass eine Verbindung zwischen den Verbindungsflächen (10, 20) gebildet wird,
wobei die erste Verbindungsfläche (10) an die zweite Verbindungsfläche (20) entlang der Verbindung geschweißt oder geklebt ist, derart, dass die Verbindung flüssigkeitsdicht ist,
wobei der erste Kanteneinsatz (11, 11') einen Stirnabschnitt (111) umfasst, der einen Teil der ersten Verbindungsfläche (10) des ersten Teils (1) bildet, und einen Befestigungsabschnitt (112, 112'), der sich von der ersten Verbindungsfläche (10) erstreckt und in das erste Teil (1) vertieft ist, und
**dadurch gekennzeichnet, dass**
der Befestigungsabschnitt (112, 112') mit einer Versteifung (12) des zugehörigen ersten Teils verbunden ist.

11. Struktur nach Anspruch 10, wobei das erste Teil (1) zu mindestens 75 Gew.-% aus Beton, vorzugsweise zu mindestens 90 Gew.-%, gebildet ist.

12. Struktur nach einem der Ansprüche 10 bis 11, wobei die flüssigkeitsdichte Verbindung so ausgelegt ist, dass sie mindestens teilweise unterhalb einer Bodenhöhe oder unterhalb einer Wasseroberfläche angeordnet ist.

13. Verbindungskammer zum Verbinden von Kanälen (90, 91), die ein unterirdisches Kanalsystem bilden, umfassend die Struktur nach einem der Ansprüche 10 bis 12, wobei:
das erste Teil (1) einen ersten Wandabschnitt (93) bildet, der einen ersten Abschnitt eines Kammerraums (96) umschließt,
das zweite Teil (2) einen zweiten Wandabschnitt (94) bildet, der einen zweiten Abschnitt des Kammerraums (96) umschließt, und
die flüssigkeitsdichte Verbindung (50, 60) sich entlang Kontaktoberflächen zwischen dem ersten und dem zweiten Wandabschnitt (93, 94) erstreckt, um eine Abdichtung zwischen dem ersten und dem zweiten Wandabschnitt (93, 94) bereitzustellen.

## Revendications

1. Procédé de réalisation d'un joint étanche au liquide, comprenant :
la réalisation d'une première partie (1) constituée de béton, présentant une première surface de joint (10) pourvue d'un premier insert de bordure (11, 11') constitué d'un premier matériau à base de polymère, ledit insert de bordure (11, 11') s'étendant le long dudit joint,
la réalisation d'une deuxième partie (2) présentant une deuxième surface de joint (20) comprenant un deuxième matériau à base de polymère et s'étendant le long dudit joint,
l'agencement des parties (1, 2) avec les première et deuxième surfaces de joint (10, 20) adjacentes l'une à l'autre, et
le soudage ou le collage de la première surface de joint (10) de la première partie (1) à la deuxième surface de joint (20) de la deuxième partie (2) le long du joint pour réaliser le joint étanche au liquide,
dans lequel le premier insert de bordure (11, 11') comprend une partie frontale (111) faisant partie de la première surface de joint (10) de la première partie (1) et une partie de fixation (112, 112') s'étendant à partir de la première surface de joint (10) et renfoncée dans la première partie (1), et
**caractérisé en ce que**
le procédé comprend en outre le raccordement de la partie de fixation (112, 112') à un renforcement (12) de la première partie associée.

2. Procédé selon la revendication 1, dans lequel la première partie est constituée à au moins 75 % en poids de béton, de préférence à au moins 90 % en poids.

3. Procédé selon la revendication 1 ou 2, comprenant en outre le renfoncement de la partie de fixation par rapport à la partie frontale selon une distance correspondant de 5 % à 200 % d'une épaisseur de la première partie en béton associée, vue dans une direction perpendiculaire à une direction de renfoncement.

4. Procédé selon l'une quelconque des revendications précédentes, comprenant en outre l'agencement d'un matériau d'étanchéité (14) sur la partie de fixation, de manière à réaliser un joint d'étanchéité étanche au liquide entre le matériau à base de béton et la partie de fixation.

5. Procédé selon l'une quelconque des revendications précédentes, comprenant en outre la réalisation d'une partie d'ancrage (114) sur la partie de fixation (112').

6. Procédé selon l'une quelconque des revendications précédentes, dans lequel l'insert de bordure est relié à la première partie pendant une opération de formage, au cours de laquelle la première partie est initialement formée.

7. Procédé selon l'une quelconque des revendications précédentes, dans lequel la deuxième partie est constituée à au moins 75 % en poids de béton, de préférence à au moins 90 % en poids, et dans lequel la deuxième surface de joint (20) est pourvue d'un deuxième insert de bordure (21) constitué du matériau à base de polymère, moyennant quoi le deuxième insert de bordure (21) s'étend le long dudit joint.

8. Procédé selon la revendication 7, comprenant en outre la réalisation d'un élément de transfert de force (30), lequel s'étend à travers le joint et présente un plus grand module d'élasticité que les inserts de bordure.

9. Procédé selon la revendication 8, comprenant en outre l'agencement d'au moins un élément d'ancrage (15, 25) respectif sur la partie (1, 2) respective et le raccordement de l'élément de transfert de force aux éléments d'ancrage (15, 25).

10. Structure comprenant :
une première partie (1) constituée de béton, présentant une première surface de joint (10) comportant un premier insert de bordure (11) constitué d'un premier matériau à base de polymère, et
une deuxième partie (2) présentant une deuxième surface de joint (20) comprenant un deuxième matériau à base de polymère,
dans laquelle les parties (1, 2) sont agencées avec leurs première et deuxième surfaces de joint (10, 20) adjacentes l'une à l'autre, de manière à former un joint entre les surfaces de joint (10, 20),
dans laquelle la première surface de joint (10) est soudée ou collée à la deuxième surface de joint (20) le long du joint, de manière à rendre le joint étanche au liquide,
dans laquelle le premier insert de bordure (11, 11') comprend une partie frontale (111) faisant partie de la première surface de joint (10) de la première partie (1) et une partie de fixation (112, 112') s'étendant à partir de la première surface de joint (10) et renfoncée dans la première partie (1), et
**caractérisée en ce que**
la partie de fixation (112, 112') est raccordée à un renforcement (12) de la première partie associée.

11. Structure selon la revendication 10, dans laquelle la première partie (1) est constituée à au moins 75 % en poids de béton, de préférence à au moins 90 % en poids.

12. Structure selon l'une quelconque des revendications 10 et 11, dans laquelle le joint étanche au liquide est adapté pour être au moins partiellement agencé en dessous d'un niveau du sol ou sous une surface d'eau.

13. Chambre de raccordement pour l'interconnexion de canaux (90, 91) formant un système de caniveau, comprenant la structure selon l'une quelconque des revendications 10 à 12, dans laquelle :
la première partie (1) forme une première section de paroi (93) renfermant une deuxième partie d'un espace de chambre (96),
la deuxième partie (2) forme une deuxième section de paroi (94) renfermant une deuxième partie de l'espace de chambre (96), et
le joint étanche au liquide (50, 60) s'étend le long de surfaces de contact entre les première et deuxième sections de paroi (93, 94) pour réaliser un joint d'étanchéité entre les première et deuxième sections de paroi (93, 94).
